# EUROPÄISCHE PATENTSCHRIFT

(11) **EP 4 179 860 B1**
(45) Veröffentlichungstag und Bekanntmachung des Hinweises auf die Patenterteilung: **08.07.2026**
(21) Anmeldenummer: 22401031.4
(22) Anmeldetag: 24.10.2022
(51) Int. Cl.: A01C 7/20, A01B 61/04

(54) **SCHARANORDNUNG UND LANDWIRTSCHAFTLICHES ARBEITSGERÄT**
COULTER ARRANGEMENT AND AGRICULTURAL WORKING DEVICE
AGENCEMENT DE SOC ET OUTIL DE TRAVAIL AGRICOLE

(30) Priorität: 11.11.2021 DE 102021129335
(43) Veröffentlichungstag der Anmeldung: 17.05.2023
(73) Patentinhaber: Amazonen-Werke H. Dreyer SE & Co. KG, 49205 Hasbergen (DE)
(72) Erfinder: Breuer, Jan Henrik, 48231 Warendorf (DE); Johannaber, Stefan Jan, 49536 Lienen (DE); Wiebusch, Thorsten, 49205 Hasbergen (DE)

(56) Entgegenhaltungen:
- DE-A1- 10 347 142
- DE-A1- 102008 045 132
- DE-A1- 3 431 327
- DE-A1- 3 620 125
- US-B1- 6 752 094

## Beschreibung

Die Erfindung betrifft eine Scharanordnung für ein landwirtschaftliches Arbeitsgerät gemäß dem Oberbegriff des Patentanspruches 1 und ein landwirtschaftliches Arbeitsgerät gemäß dem Oberbegriff des Patentanspruches 10.

Gattungsgemäße Scharanordnungen für landwirtschaftlichen Arbeitsgeräte weisen üblicherweise wenigstens eine mit einem Ackerboden in Eingriff bringbare Schareinheit, insbesondere ein Schar, auf. Derartige Scharanordnungen sind dazu geeignet den Ackerboden einer landwirtschaftlich genutzten Nutzfläche für eine Ausbringung und/oder zur Ablage von granularem und/oder flüssigem Verteilgut, insbesondere Saatgut und/oder Dünger, entsprechend vorzubereiten und/oder zu bearbeiten. Insbesondere sind derartige Scharanordnungen dazu vorgesehen, reihenweise jeweils zumindest eine Furche entlang der Nutzfläche zu öffnen und/oder auszubilden, im Bereich und/oder innerhalb derer das Verteilgut bedarfsgerecht ausbringbar und/oder ablegbar ist. Eine solche Scharanordnung ist beispielsweise in der Druckschrift DE 1 295 260 A beschrieben.

Landwirtschaftlich genutzte Arbeitsgeräte weisen für gewöhnlich mehrere derartiger Scharanordnungen auf, welche beabstandet zueinander und quer zu einer Arbeits- bzw. Fahrtrichtung gesehen entlang eines Rahmens des Arbeitsgeräts angeordnet und/oder angelenkt sind. Während des Betriebs werden die sich innerhalb der Scharanordnungen befindlichen Schareinheiten, insbesondere Schare, in einer definierten Tiefe, welche zumindest im Wesentlichen die Ablagetiefe des Verteilguts bestimmt, durch den Ackerboden geführt und/oder gezogen. Hierbei wird der Ackerboden, insbesondere zumindest im Nahbereich eines Eingriffspunktes der Schareinheiten, mittels der jeweiligen Scharanordnungen verdrängt.

Um die zwischen dem Ackerboden und der Scharanordnung resultierenden, insbesondere seitlich gerichteten, Kräfte und/oder Momente, möglichst bereits innerhalb der Scharanordnung aufzuheben, sind unter anderem auch Scharanordnungen bekannt geworden, welche jeweils mehrere Schareinheiten, insbesondere Schare, umfassen. Eine derartige Scharanordnung ist beispielsweise in der Druckschrift DE 10 2008 045 132 A1 beschrieben. Demnach umfasst die Scharanordnung zumindest einen Tragarm, welcher insbesondere zentral zu den Schareinheiten angeordnet und/oder in vertikaler Richtung schwenkbar an einem Rahmen des Arbeitsgeräts anlenkbar ist Die Schareinheiten der Scharanordnung sind dabei jeweils über wenigstens einen Haltearm, insbesondere paarweise, mit dem Tragarm gekoppelt und mit einem definierten seitlichen Abstand zueinander beabstandet angeordnet.

Der seitliche Abstand, den die, insbesondere paarweise, innerhalb einer Scharanordnung angeordneten Schareinheiten aufweisen, ist dabei abhängig von einem vorgesehenen Soll-Abstand, mit dem das Verteilgut in den entsprechenden Reihen und/oder Furchen ausgebracht und/oder abgelegt werden soll.

In der Praxis hat sich jedoch herausgestellt, dass der fest vorgegebene und/oder eingestellte seitliche Abstand derartiger, insbesondere gemeinsam an einem Tragarm angeordneter, Schareinheiten problematisch ist. Denn aus den seitlichen Abständen der Schareinheiten resultieren Zwischenräume, in welche während des Betriebs unter anderem Störkörper, beispielsweise in Form von Steinen oder dergleichen, gelangen können und so zwischen den Schareinheiten eingeklemmt werden bzw. derartige Zwischenräume verstopfen. Dies wirkt sich wiederrum negativ auf den Betrieb der Scharanordnung aus und/oder kann zu Beschädigungen innerhalb der Scharanordnungen führen.

Die der Erfindung zugrunde liegende Aufgabe besteht somit darin, eine Scharanordnung so zu gestalten, dass die Betriebssicherheit, insbesondere paarweise und/oder besonders nah beieinander angeordneter Schareinheiten, in einfacher Weise verbessert ist.

Diese Aufgabe wird erfindungsgemäß durch die kennzeichnenden Merkmale des Anspruchs 1 gelöst.

In Folge dieser Maßnahme kann sich der Abstand zwischen den Schareinheiten bedarfsweise, insbesondere wenn während des Betriebs Störkörper in den zwischen den Schareinheiten gebildeten Zwischenraum gelangen, zumindest kurzzeitig und/oder temporär vergrößern. Somit ist sichergestellt, dass sich derartige Störkörper von der Scharanordnung lösen und/oder sich gar nicht erst zwischen den Schareinheiten festsetzen können. Besonders bevorzugt ist vorgesehen, dass, insbesondere relativ zum Tragarm gesehen, jeweils alle Schareinheiten einer Scharanordnung seitlich beweglich am Tragarm angeordnet sind. Ferner bevorzugt ist eine Scharanordnung, bei welcher die jeweiligen Schareinheiten in gegensätzlicher Richtung zueinander beweglich angeordnet sind. Alternativ dazu kann auch vorgesehen sein, dass nur eine der Schareinheiten beweglich angeordnet ist, während die zumindest eine weitere Schareinheit zumindest im Wesentlichen starr bzw. in seitlicher Richtung unbeweglich zum Tragarm und/oder Rahmen des Arbeitsgeräts angeordnet ist. Somit ist wenigstens eine der Schareinheiten mittels der Ausweicheinrichtung dazu eingerichtet, seine Lage und/oder Position hinsichtlich des Tragarms in Abhängigkeit von Störkörpern und/oder Hindernissen in einer, vorzugsweise von der anderen Schareinheit abweisenden, seitlich gerichteten Ausweichrichtung zumindest kurzzeitig anzupassen bzw. zu verändern. Mit anderen Worten ist damit eine Scharanordnung geschaffen, bei welcher die, insbesondere paarweise, angeordneten Schareinheiten dazu eingerichtet sind, sich beim Kontakt und/oder einem Zusammenstoß mit Störkörpem, Hindernissen oder dergleichen auseinander zu spreizen. Die Ausweicheinrichtung ist hierbei bevorzugt an wenigstens einem der Haltearme angeordnet.

Der Tragarm ist hierbei bevorzugt zumindest in etwa mittig bzw. zentral zu den Schareinheiten angeordnet, wobei erfindungsgemäß jede Schareinheit der Scharanordnung jeweils über zumindest einen Haltearm paarweise mit dem Tragarm gekoppelt ist. Des Weiteren sind die Schareinheiten alternativ oder zusätzlich seitlich, vorzugsweise links und rechts zu einer Längsrichtung der Scharanordnung bzw. in Fahrtrichtung des Arbeitsgeräts gesehen, am und/oder zum Tragarm angeordnet. Der einer Schareinheit zugeordnete Haltearm ist dabei vorzugsweise aus einem einzelnen Körper ausgebildet, wobei alternativ auch eine mehrteilige, insbesondere zusammengesetzte, Ausführung denkbar ist.

Eine Schareinheit umfasst bevorzugt ein oder mehrere mit dem Boden in eingriff bringbare Schare. Das eine oder die mehreren Schare können hierbei nach Art eines Scheiben- und/oder Meißelschars ausgebildet sein, wobei eine aus wenigstens einem, insbesondere drehbar gelagerten Schar und einer, insbesondere zumindest im Wesentlichen starren, Materialablagevorrichtung gebildete Schareinheit besonders bevorzugt ist. Eine derartige Materialablagevorrichtung weist bevorzugt zumindest einen dem Schar zugeordneten Furchenformer und/oder eine dem Schar zugeordnete Ausbringleitung zum Zubringen des Verteilguts auf. Ferner bevorzugt kann die Schareinheit und/oder das Schar auch nach Art eines Doppelscheibenschars ausgebildet sein, wobei zumindest eines der Doppelscheibenschare links vom Tragarm und zumindest ein anderes der Doppelscheibenschare rechts vom Tragarm angeordnet sein kann.

Weiterhin ist vorzugsweise vorgesehen, dass der Abstand der Schareinheiten zueinander im Bereich von etwa 100 mm bis zu 200 mm ausgeführt ist, wobei der Abstand alternativ oder zusätzlich innerhalb diesem Bereich auch einstellbar sein kann.

Darüber hinaus ist die Scharanordnung bevorzugt mit einstellbarem Schardruck gegen den Boden andrückbar, wobei der Scharanordnung hierzu wenigstens eine betätigbare Stelleinrichtung zugeordnet ist, welche dazu eingerichtet ist, die Scharanordnung, insbesondere die Schareinheiten, mit einer definierten Stellkraft gegen den Ackerboden anzudrücken. Insbesondere kann hierbei wenigstens eine Stelleinrichtung mehreren Scharanordnungen gruppenweise oder jeweils jeder Scharanordnung einzeln zugeordnet sein. Alternativ oder zusätzlich kann die Scharanordnung auch mittels Federkraft gegen den Rahmen vorspannbar sein. Darüber hinaus umfasst die Scharanordnung vorzugsweise auch zumindest eine Tiefenführungsrolle bzw. ein Tragrad, welche bevorzugt am, insbesondere zentralen, Tragarm angeordnet ist. Die zumindest eine Tiefenführungsrolle kann dabei in Längs- bzw. Fahrtrichtung gesehen, insbesondere in vorlaufender Weise, vor oder, insbesondere in nachlaufender Weise, hinter den Schareinheiten angeordnet sein.

In der erfindungsgemäßen Scharanordnung ist wenigstens eine der Schareinheiten mittels der zugeordneten Ausweicheinrichtung bezüglich des Tragarms und der jeweils anderen Schareinheit in seitlicher Richtung verschwenkbar Wenigstens eine der Schareinheiten ist in nicht erfindungsgemäßen Ausführungsformen mittels der Ausweicheinrichtung hinsichtlich des Tragarms und/oder der jeweils anderen Schareinheit translatorisch verschiebbar angeordnet. Erfindungsgemäß ist wenigstens eine der Schareinheiten mittels der Ausweicheinrichtung schwenkbar hinsichtlich des Tragarms und der jeweils anderen Schareinheit angeordnet. In einer ferner bevorzugten Ausführungsform kann wenigstens eine der Schareinheiten mittels der Ausweicheinrichtung sowohl translatorisch verschiebbar als auch schwenkbar angeordnet sein.

In einer nicht erfindungsgemäßen Scharanordnung ist wenigstens eine der Schareinheiten mittels der Ausweicheinrichtung um eine zugeordnete und zu einer Längsrichtung der Scharanordnung korrespondierende, vorzugsweise horizontale, Achse verschwenkbar. Die Achse ist hierzu bevorzugt zumindest im Wesentlichen horizontal und parallel zur Längs- bzw. Fahrtrichtung ausgerichtet. Weiterhin ist die Achse, um die wenigstens eine der Schareinheiten verschwenkbar ist, in vertikaler Richtung gesehen bevorzugt oberhalb der zumindest einen Schareinheit angeordnet. Alternativ oder zusätzlich kann die Achse auch entlang der Ausweicheinrichtung, vorzugsweise die Ausweicheinrichtung schneidend und/oder durchdringend, ausgebildet sein.

Optional ist für jede der mehreren Schareinheiten jeweils eine derartig ausgebildete und/oder ausgerichtete Achse vorgesehen. Mit anderen Worten, werden die Schareinheiten hierbei beim Zusammenstoßen mit dem Störkörper bevorzugt nach oben hin weggeklappt und anschließend in die Ausgangsstellung wieder herunter geklappt. Während einer Verschwenkung der Schareinheiten wird der Abstand im Bereich des Bodens und in Längsrichtung der Scharanordnung gesehen gleichmäßig erhöht. Diese Ausführungsform zeichnet sich durch eine besonders einfache Implementierung innerhalb der Scharanordnung aus, womit ein besonders geringer Herstellungsaufwand für eine derartige Scharanordnung erreichbar ist.

In der erfindungsgemäßen Scharanordnung ist wenigstens eine der Schareinheiten mittels der Ausweicheinrichtung um eine zugeordnete und zumindest im Wesentlichen vertikal ausgerichtete Achse verschwenkbar. Die Achse ist hierzu bevorzugt zumindest im Wesentlichen aufrecht bzw. vertikal zum Boden ausgerichtet. Alternativ oder zusätzlich kann die Schwenkachse auch zur Vertikalen geneigt sein, wobei die Achse dabei bevorzugt um etwa 15° bis 75° oder besonders bevorzugt um etwa 30° bis 45 ° zur Vertikalen geneigt ausgerichtet ist. Besonders bevorzugt ist für jede der mehreren Schareinheiten jeweils eine derartig ausgebildete und/oder ausgerichtete Achse vorgesehen. Bei einer entsprechenden Verschwenkung der Schareinheiten ist im verschwenkten Zustand zwischen den Schareinheiten in Längs- bzw. Fahrtrichtung gesehen ein minimaler und maximaler Abstand ausgebildet. Ist die Achse zusätzlich in Fahrtrichtung vor den Schareinheiten, insbesondere einer vertikalen Symmetrie- bzw. Hauptträgheitsachse der jeweiligen Schareinheiten, angeordnet, ist ein besonders vorteilhafter Effekt erreicht. Hierbei ist unter anderem ein sogenannter Nachlaufeffekt der Schareinheiten erreichbar, bei dem die Schareinheiten dazu eingerichtet sind, sich nach dem Verschwenkvorgang aus einem zumindest teilweise ausgelenkten Zustand selbsttätig in die Ausgangsstellung zurück zu stellen. Weiterhin ist hierbei vorteilhaft, dass der Abstand im vorderen Bereich zwischen den Schareinheiten während der Verschwenkung bzw. dem Ausweichen zumindest im Wesentlichen nur geringfügig oder gar nicht beeinflusst und/oder verändert wird, während der Abstand im hinteren Bereich zwischen den Schareinheiten maximal ist. Mit anderen Worten, bildet sich zwischen den Schareinheiten während dem Verschwenken ein sich nach hinten öffnendes V.

In einer nicht erfindungsgemäßen Scharanordnung ist die Ausweicheinrichtung zwischen wenigstens einem Haltearm und wenigstens einer, insbesondere mit dem Haltearm gekoppelten, Schareinheit angeordnet. Hierbei ist der Haltearm einer jeweiligen Schareinheit vorzugsweise zumindest im Wesentlichen starr und/oder unbeweglich gegenüber dem Tragarm ausgebildet. Somit wird während dem Verschwenkvorgang bzw. bei einem Kontakt des Störkörpers mit der Schareinheit zumindest nahezu ausschließlich nur die Schareinheit innerhalb der Scharanordnung ausweichend verschoben und/oder verschwenkt. Diese Ausführungsform zeichnet sich, insbesondere während der Verschwenkung, durch einen besonders geringen Platz- und/oder Bauraumbedarf aus.

In der erfindungsgemäßen Scharanordnung ist die Ausweicheinrichtung zwischen dem Tragarm und wenigstens einem der Haltearme angeordnet. Besonders bevorzugt ist zwischen jedem Haltearm und dem Tragarm jeweils eine Ausweicheinrichtung vorgesehen. Die Ausweicheinrichtung ist hierbei bevorzugt dazu eingerichtet, während dem Verschwenkvorgang bzw. beim Kontakt des Störkörpers sowohl die Schareinheit als auch den dazu zugeordneten Haltearm zu verschwenken. Der Haltearm bildet hierbei einen zwischen der Schareinheit und dem Tragarm ausgebildeten Hebelarm und erlaubt damit einen besonders großen Verstellweg, um insbesondere großen Störkörpern gut ausweichen zu können.

In einer weiteren Weiterbildung der erfindungsgemäßen Scharanordnung weist die Ausweicheinrichtung zumindest ein, insbesondere in Abhängigkeit des Abstands der Schareinheiten, elastisch verformbares Element auf, welches vorzugsweise nach Art eines Elastomers ausgebildet ist. Besonders bevorzugt ist die Ausweicheinrichtung hierbei nach Art zumindest eines flach und/oder scheibenförmigen Gummielements ausgebildet. Alternativ oder zusätzlich sind auch elastisch reversibel verformbare Kunststoffmaterialien denkbar. Bei einer derartigen Ausführungsform ist die Ausweicheinrichtung zumindest im Wesentlichen wartungsfrei ausgebildet, womit eine besonders hohe Betriebssicherheit der Scharanordnung erreicht ist.

Darüber hinaus ist eine nicht erfindungsgemäße Scharanordnung offenbart, bei der die Ausweicheinrichtung zumindest teilweise durch wenigstens einen der Haltearme gebildet ist, wobei der wenigstens eine Haltearm bevorzugt zumindest teilweise federelastisch und/oder nach Art einer Blattfeder ausgebildet ist. Vorzugsweise ist die Ausweicheinrichtung hierbei zumindest teilweise nach Art eines Federblechs ausgebildet und dazu eingerichtet, sich zum Anpassen des seitlichen Abstands zumindest teilweise und reversibel zu verformen. Alternativ oder zusätzlich kann die Ausweicheinrichtung, insbesondere der Haltearm, auch zumindest teilweise aus einem Kunststoffmaterial ausgebildet sein. Darüber hinaus ist denkbar, dass der Haltearm aus mehreren Abschnitten gebildet ist und einer oder mehrere der Abschnitte federelastisch und/oder nach Art eines Federblechs ausgebildet sind. Hierbei ist besonders bevorzugt ein dem Tragarm zugeordneter und/oder ein mit dem Tragarm unmittelbar verbundener Abschnitt des Haltearms federelastisch und/oder nach Art einer Blattfeder ausgebildet. Die Ausweicheinrichtung ist hierbei in den jeweiligen Haltearm der Schareinheiten integriert, womit eine besonders einfach ausgebildete Scharanordnung erreicht ist.

In einer anderen bevorzugten Ausführungsform der erfindungsgemäßen Scharanordnung ist der wenigstens einen Ausweicheinrichtung und/oder wenigstens einer Schareinheit zumindest ein vorspannbares Rückstellelement, insbesondere nach Art eines Federelements, zugeordnet, welches vorzugsweise die Haltearme und/oder Schareinheiten miteinander verbindend angeordnet ist. Das Rückstellelement ist hierbei vorzugsweise dazu eingerichtet, die Schareinheiten in ihrer Ausgangslage mit einer entsprechenden Rückstellkraft vorzuspannen und/oder die Schareinheiten nach dem Verschwenken bzw. Ausweichen, insbesondere nach dem Passieren und/oder Lösen des Störkörpers, mittels der Rückstellkraft in ihre Ausgangslage zurück zu bewegen und/oder zurück zu verstellen. Das Rückstellelement kann beispielsweise nach Art eines Federblechs und/oder einer Spiralfeder oder dergleichen ausgebildet sein oder alternativ oder zusätzlich wenigstens eine mittels Stellenergie betreibbare und/oder beaufschlagbare Stelleinrichtung, insbesondere nach Art einer Aktorik und/oder eines Stellzylinders, umfassen. Das Rückstellelement ist ferner bevorzugt zwischen den jeweiligen Haltearmen der Schareinheiten angeordnet, wobei die Haltearme mittels des Rückstellelements direkt und/oder unmittelbar miteinander verbunden sind. Alternativ oder zusätzlich kann das Rückstellelement auch zwischen den mehreren Schareinheiten, insbesondere Scharen, angeordnet sein. Diese Ausführungsform erlaubt eine besonders sichere Rückstellung der Schareinheiten, was bei schweren und/oder verhältnismäßig stark verdichteten Böden besonders vorteilhaft ist.

Bei einer besonders bevorzugten Ausführungsform der erfindungsgemäßen Scharanordnung umfasst die Ausweicheinrichtung wenigstens ein austauschbares, vorzugsweise zwischen dem Tragarm und wenigstens einem der Haltearme einbringbares, Distanzelement, mittels dem der seitliche Abstand zwischen den Schareinheiten, insbesondere in definierter Weise, beeinflussbar ist. Hierbei können vom Anwender eine Mehrzahl verschiedener Distanzelemente vorgehalten werden, welche sich in ihren Abmessungen zumindest teilweise unterschieden. Jedes der mehreren Distanzelemente ist bevorzugt einem definierten Soll-Abstand der Furchen bzw. einem Reihenabstand entlang der Nutzfläche zugeordnet, wobei die Distanzelemente vom Anwender je nach benötigtem Furchenabstand bzw. Reihenabstand in die Ausweicheinrichtung einbringbar sind. Alternativ dazu ist auch denkbar, dass die mehreren Distanzelemente zumindest nahezu identisch ausgebildet sind, wobei unterschiedlichen Furchenabständen bzw. Reihenabständen eine unterschiedliche Anzahl an Distanzelementen zugeordnet ist. Darüber hinaus ist alternativ dazu denkbar, dass die Ausweicheinrichtung zumindest teilweise aus dem Distanzelement gebildet ist. Bei einer derartigen Ausführungsform ist der Furchen- und/oder Reihenabstand besonders einfach und flexibel vom Anwender anpassbar. Insbesondere ist dadurch erreicht, dass die einer Schareinheit zugeordneten Schare mittels derartig ausgeführter und/oder angeordneter Distanzelemente gemeinsam an den jeweiligen Reihenabstand anpassbar sind. Weiterhin kann somit alternativ oder zusätzlich auch eine der Schareinheit zugeordnete Materialzubring- und/oder Materialablagevorrichtung, insbesondere bestehend aus wenigstens einer Ausbringleitung und/oder einem Furchenformer, gemeinsam mit den Scharen innerhalb der Schareinheit an einen bestimmten Reihenabstand anpassbar sein.

In einer besonders bevorzugten Weiterbildung der erfindungsgemäßen Scharanordnung ist der Ausweicheinrichtung wenigstens ein, vorzugsweise zwischen dem Tragarm und wenigstens einem der Haltearme ausgebildetes, Anschlagelement zugeordnet, mittels welchem der seitliche Abstand der Schareinheiten auf einen maximalen und/oder minimalen Abstand begrenzt ist. Das wenigstens eine Anschlagelement ist hierbei dazu eingerichtet, die Verschwenkung und/oder Verschiebung zumindest einer Schareinheit, insbesondere aller Schareinheiten, der Scharanordnung zu begrenzen. Die Verschwenkung und/oder Verschiebung kann hierbei nach außen hin, insbesondere von einer Längs- und/oder Mittelachse der Scharanordnung weg, oder alternativ oder zusätzlich nach innen hin, insbesondere zu einer Längs- und/oder Mittelachse der Scharanordnung hin, begrenzbar sein. Der maximale und/oder minimale Abstand bzw. ein maximaler Verschwenk- und/oder Verstellbereich ist mittels des einen oder der mehreren Anschlagelemente derart gewählt, dass eine plastische und/oder irreversible Verformung und/oder Verstellung der Ausweicheinrichtung zumindest nahezu ausgeschlossen ist. Bei einer derartigen Ausführungsform ist darüber hinaus eine Beeinflussung des Furchen- und/oder Reihenabstandes bei Verschwenkung und/oder Auslenkung der Schareinheiten besonders gering.

Bei einer weiteren besonders bevorzugten Ausführungsform der erfindungsgemäßen Scharanordnung ist wenigstens einer der Schareinheiten zumindest ein Fang- und/oder Andrückelement zugeordnet, welches an dem Haltearm und/oder an der Schareinheit angelenkt ist, und welches in seiner Lage und/oder Position am Tragarm in einer zur Schareinheit korrespondierenden Weise beweglich angeordnet ist. Bevorzugt ist jeweils ein Fang- und/oder Andruckelement starr mit jeweils einer Schareinheit und/oder mit einem der Schareinheit zugeordneten Haltearm verbunden. Die Ausweicheinrichtung ist hierbei dazu eingerichtet, sowohl zumindest eine der Schareinheiten als auch das dazu zugeordneten Fang- und/oder Andrückelement zu verschwenken und/oder zu verschieben. Hierdurch ist erreicht, dass das Fang- und/oder Andrückelement der jeweiligen Schareinheit unmittelbar folgen kann und somit stets optimal zur Schareinheit ausgerichtet ist. Das Fang- und/oder Andrückelement ist hierbei ferner bevorzugt Teil einer der jeweiligen Schareinheit zugeordneten der Materialablagevorrichtung, welche dazu eingerichtet ist, das Verteilgut zuzubringen und/oder entlang der Nutzfläche, insbesondere Furche, abzulegen.

Besonders bevorzugt ist das Fang- und/oder Andruckelement dabei unmittelbar und/oder im Nahbereich hinter der jeweiligen Schareinheit angeordnet.

Das Fang- und/oder Andrückelement ist des Weiteren vorzugsweise nach Art einer Fang- und/oder Andruckrolle ausgebildet.

In einer weiteren besonders bevorzugten Weiterbildung der erfindungsgemäßen Scharanordnung sind die Schareinheiten zumindest nahezu spiegelbildlich zueinander am Tragarm angeordnet und/oder ausgebildet. Bevorzugt sind die einer Scharanordnung gemeinsam zugeordneten Schareinheiten hierbei symmetrisch bzw. quer zur Fahrtrichtung gesehen mit gleich Abstand zum Tragarm beabstandet. Dies ist insbesondere für den Verschwenkungs- und/oder Verschiebungsanteil der jeweiligen Schareinheiten vorteilhaft, da die Verschwenkung und/oder Verschiebung hierbei zumindest nahezu gleichmäßig zwischen den einzelnen Schareinheiten einer Scharanordnung aufgeteilt wird, und so die jeweilige erforderliche Verschwenkung und/oder Verschiebung der jeweiligen Schareinheiten besonders gering oder minimal ist.

Bei einer weiteren vorteilhaften Ausführungsform der erfindungsgemäßen Scharanordnung sind die Schareinheiten in Längs- und/oder Fahrtrichtung gesehen versetzt zueinander angeordnet und/oder ausgebildet.

In einer besonders bevorzugten Weiterbildung der erfindungsgemäßen Scharanordnung ist jeder Schareinheit jeweils eine Ausweicheinrichtung zugeordnet.

Darüber hinaus wäre eine vorteilhafte Ausführungsform denkbar, bei der wenigstens einer der Haltearme in vertikaler Richtung gesehen auf unterschiedlichen Höhen positionierbar und/oder im Winkel anstellbar ist. Mittels dieser Maßnahme ist die Scharanordnung, insbesondere die jeweilige Schareinheit und die dazu zugeordnete Materialablagevorrichtung, dazu eingereicht, verschiedene Sorten und/oder Typen von Verteilgut bedarfsgerecht auf den dafür vorgesehenen Ablagetiefen innerhalb der auszubringen und/oder abzulegen. Ferner wäre alternativ oder zusätzlich denkbar, dass die Haltearme der jeweiligen Schareinheiten unterschiedliche Abmessungen, insbesondere

Längen, aufweisen. Außerhalb des Erfindungsgegenstands wäre denkbar, dass die jeweiligen Schareinheiten einer Scharanordnung über den Haltearm direkt mit dem Rahmen des Arbeitsgeräts verbunden und/oder angelenkt sind, wobei die Haltearme hierbei alternativ oder zusätzlich in Fahrtrichtung gesehen versetzt am Rahmen angeordnet und/oder angelenkt sein können.

Die der Erfindung zugrunde liegende Aufgabe wird ebenso mit einem landwirtschaftlichen Arbeitsgerät der eingangs genannten Art gelöst, wobei zumindest eine Scharanordnung des Arbeitsgeräts nach zumindest einer der bevorzugten Ausführungsformen der erfindungsgemäßen Scharanordnung ausgebildet ist. Hinsichtlich der Vorteile und Modifikationen des erfindungsgemäßen landwirtschaftlichen Arbeitsgeräts wird zunächst auf die Vorteile und Modifikationen der erfindungsgemäßen Scharanordnung verwiesen.

Das Arbeitsgerät ist vorzugsweise nach Art einer Landwirtschaftlichen Verteilmaschine, insbesondere Sämaschine, ausgebildet und zum Ausbringen und/oder Ablegen von granularem und/oder flüssigem Verteilgut, insbesondere Saatgut und/oder Dünger, entlang einer landwirtschaftlichen Nutzfläche, vorgesehen. Das Arbeitsgerät umfasst hierzu zumindest eine am Rahmen des Arbeitsgeräts angelenkte Scharanordnung.

Bei einer bevorzugten Ausführungsform des erfindungsgemäßen Arbeitsgeräts sind eine Vielzahl von Scharanordnungen entlang des Rahmens angeordnet und/oder angelenkt, wobei die Scharanordnungen in Fahrtrichtung zumindest teilweise versetzt zueinander angeordnet sind. Insbesondere kann hierbei vorgesehen sein, dass sich die Längen der Tragarme, vorzugsweise benachbarter Scharanordnungen, unterscheiden. Alternativ oder zusätzlich wäre auch ein in Fahrtrichtung versetzter Anlenkpunkt am Rahmen des Arbeitsgeräts denkbar.

Weitere Einzelheiten der Erfindung sind der Beispielsbeschreibung und den Zeichnungen zu entnehmen. Die Zeichnungen zeigen
- Fig.1A: einen Ausschnitt eines landwirtschaftlichen Arbeitsgeräts mit einer erfindungsgemäßen Scharanordnung in einer perspektivischen Ansicht von hinten;
- Fig.1B: eine erfindungsgemäße Scharanordnung in perspektivischer Einzelansicht von hinten;
- Fig.2A: die Scharanordnung aus Fig.1B mit Schareinheiten in Ausgangsstellung und in Draufsicht;
- Fig.2B: die Scharanordnung aus Fig.2A mit Schareinheiten in gespreizter Stellung;
- Fig.3: ein alternatives Ausführungsbeispiel der erfindungsgemäßen Scharanordnung mit in Fahrtrichtung versetzten Schareinheiten in einer Ansicht von oben;
- Fig.4A: die erfindungsgemäße Scharanordnung mit einer vertikalen Ausweichachse in Seitenansicht;
- Fig.4B: die Scharanordnung aus Fig.4A in Draufsicht;
- Fig.4C: die erfindungsgemäße Scharanordnung mit einer zur Vertikalen geneigten Ausweichachse in Seitenansicht;
- Fig.5A: eine nicht erfindungsgemäße Scharanordnung mit einer horizontalen Ausweichachse in Seitenansicht;
- Fig.5B: die Scharanordnung aus Fig.5A in einer Ansicht von hinten;
- Fig.6: eine erfindungsgemäße Ausweicheinrichtung in vergrößerter Perspektivansicht;
- Fig.7: die Schareinheiten mit einem Rückstellelement in näherer Perspektivansicht von hinten; und
- Fig.8: eine Schareinheiten mit einem Fang- und/oder Andrückelement in einer perspektivischen Einzelansicht von hinten.

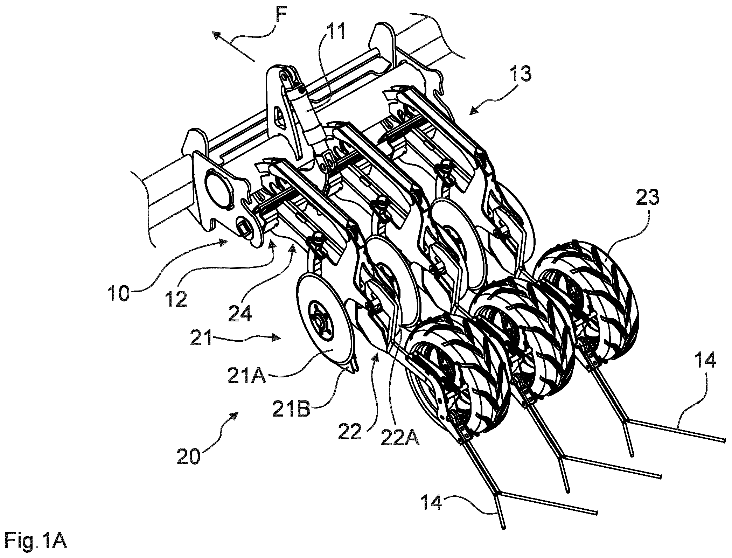

Eine Mehrzahl an einem Rahmen 10 angeordneter Scharanordnungen 20 sind in Fig.1A gezeigt. Derartige Scharanordnungen 20 können an landwirtschaftlichen Arbeitsgeräten, welche nach Art von Verteilmaschinen, insbesondere Sämaschinen, Bodenbearbeitungsmaschinen und/oder Bestellkombinationen ausgebildet sind, eingesetzt werden.

Die Scharanordnungen 20 sind in definierten Abständen beabstandet zueinander quer zur Fahrtrichtung F bzw. Arbeitsrichtung angeordnet und in bekannter Weise über eine Überlastsicherung 12 und eine Parallelogramm-Aufhängung 13 mit dem Rahmen 10 gekoppelt. Alternativ hierzu können die Scharanordnungen 10 auch jeweils über eine Einlenker-Aufhängung bzw. über jeweils eine Einzelschwinge mit dem Rahmen 10 gekoppelt sein. Die Überlastsicherung 12 ist hierbei beispielhaft nach Art einer Gummilagerung ausgeführt, wobei alternativ auch andere Varianten von Überlastsicherungen 12 denkbar wären. Darüber hinaus ist eine den Scharanordnungen 20 zugeordnete, insbesondere zentrale, Stelleinrichtung 11 vorgesehen, welche dazu eingerichtet ist, die Scharanordnungen 20 bedarfsgerecht und in einstellbarer Weise mit einem definierten Schardruck gegen den Boden einer landwirtschaftlichen Nutzfläche anzudrücken. Die Stelleinrichtung 11 ist hierbei beispielhaft als hydraulischer Stellzylinder ausgeführt und einerseits mit einem festen, insbesondere nicht verdrehbaren, Teil des Rahmens 10, und andererseits mit einem drehbaren Teil des Rahmens 10 (an dem die Scharanordnungen 20 angelenkt sind) verbunden. Die über die Stelleinrichtung 11 generierbaren Stellkräfte für den Schardruck werden hierbei über die Überlastsicherung 12 an die jeweiligen Scharanordnungen 20 übertragen.

Die illustrierten Scharanordnungen 20 sind hierbei dazu eingerichtet, die Nutzfläche, insbesondere den Ackerboden, reihenbezogen zu bearbeiten und/oder für die Ausbringung bzw. für die Ablage von granularem und/oder flüssigem

Verteilgut, insbesondere Saatgut und/oder Dünger, vorzubereiten. Hierzu umfasst jede Scharanordnung 20 mindestens eine Schareinheit 21, 22, welche dazu eingerichtet ist, in den Ackerboden, insbesondere in Abhängigkeit des Schardrucks und/oder einer eingestellten Ablagetiefe, einzudringen und so eine für das Verteilgut vorgesehene Furche auszubilden. Darüber hinaus ist jeder Scharanordnung 20 ein nach Art einer Tiefenführungsrolle 23 ausgebildetes Trag- und/oder Tiefenführungselement zugeordnet. Den hier gezeigten Scharanordnungen 20 sind ferner Zustreichelemente 14 zugeordnet, welche in Fahrtrichtung F hinter den Trag- und/oder Tiefenführungselementen 23 angeordnet und zum gleichmäßigen Bedecken und/oder Verschließen der geöffneten Furchen und/oder des ausbringbaren Verteilguts vorgesehen sind.

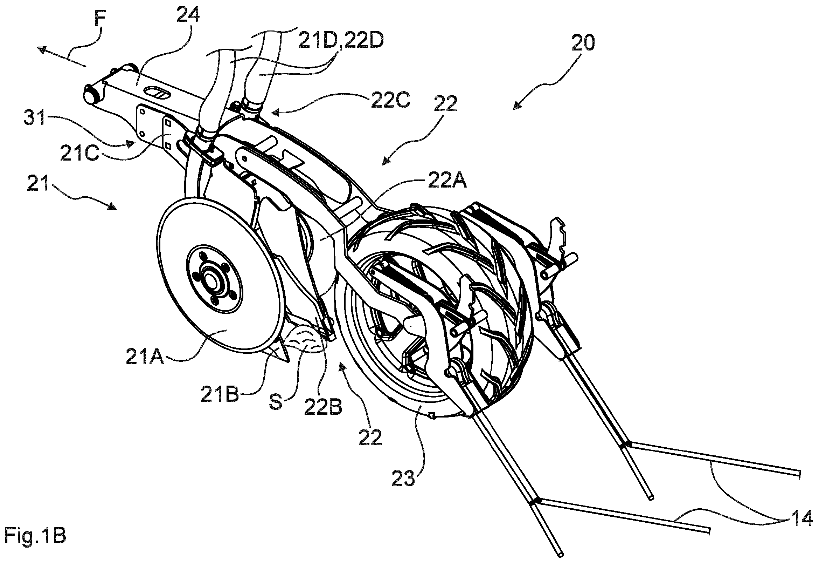

Wie in der Fig.1B besser zu sehen ist, umfasst eine einzelne Scharanordnung 20 einen, insbesondere zentral angeordneten, Tragarm 24, welcher in bekannter Weise in vertikaler Richtung schwenkbar am Rahmen 10 des Arbeitsgeräts anlenkbar ist. Weiterhin umfasst die Scharanordnung 20 mehrere Schareinheiten 21, 22, welche jeweils über einen Haltearm 21C, 22C, insbesondere paarweise, mit dem Tragarm 24 gekoppelt und mit einem definierten seitlichen Abstand, beispielsweise zwischen 100 - 200 mm oder mehr, zueinander beabstandet angeordnet sind.

Die gezeigten Schareinheiten 21, 22 bestehen hierbei jeweils aus einem drehbaren Scheibenschar 21A, 22A und einem, insbesondere starr ausgeführten, Meißelschar 21B, 22B. Alternativ kann eine Schareinheit 21, 22 auch aus anderen Kombinationen von Scharen oder nur aus einem Schar gebildet sein. Fernerwäre auch denkbar das jede der jeweiligen Schareinheiten 21, 22 jeweils als Doppelscheibenschar ausgebildet ist. Alternativ oder zusätzlich kann auch wenigstens eins der Schare 21A-22B einer Schareinheit 21, 22 als Furchenformer oder dergleichen ausgebildet sein. Darüber hinaus ist wie angedeutet dargestellt jeder Schareinheit 21, 22 eine Materialzubring- und/oder Materialablagevorrichtung zugeordnet, welche jeweils eine Ausbringleitung 21D, 22D zum bedarfsgerechten Zubringen des Verteilguts umfasst.

Wie in der Abbildung ebenfalls angedeutet, kann es während des Betriebs bzw. während dem Arbeitsvorgang vorkommen, dass auf der Nutzfläche sich befindliche Störkörper S zwischen die Schareinheiten 21, 22 gelangen. Derartige Störkörper S können beispielsweise Steine, feste Erdklumpen oder dergleichen sein.

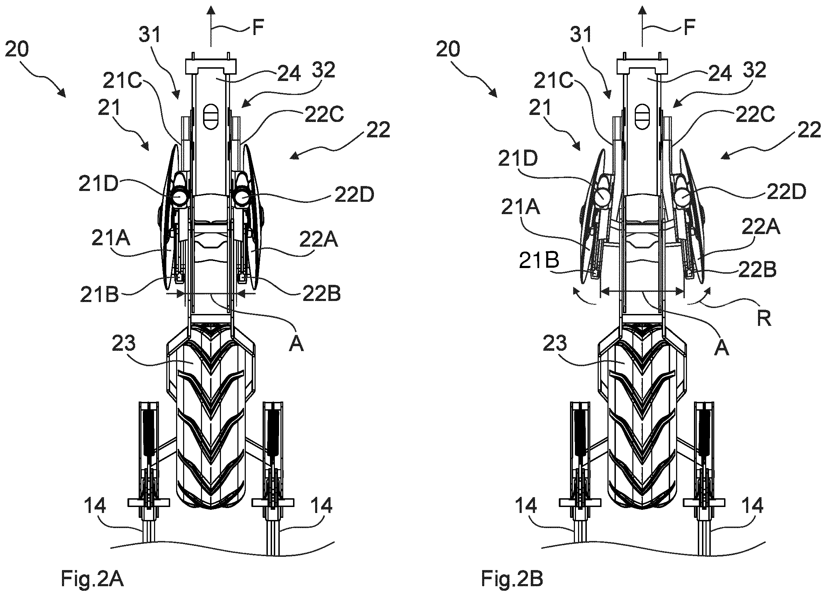

Damit derartige Störkörper S sich zwischen den Schareinheiten 21, 22 gar nicht erst festklemmen und/oder aus der Scharanordnung 20 entweichen können, ist wenigstens einer der Schareinheiten 21, 22, insbesondere einem Schar 21A-22B, zumindest eine Ausweicheinrichtung 31, 32 zugeordnet, mittels der die Schareinheiten 21, 22, insbesondere Schare 21A-22B, in ihrer Lage und/oder Position am Tragarm 24, insbesondere mit veränderlichem Abstand A, in einer im Wesentlichen seitlichen Richtung R zueinander beweglich angeordnet sind. Diese Funktionsweise ist anhand der Figuren 2A und 2B nachfolgend näher beschrieben.

Die Fig.2A zeigt die Scharanordnung 20 in einer, insbesondere nicht verstellten, Ausgangs- bzw. Normalstellung, bei welcher der Abstand A der Schareinheiten 21, 22 dem definierten Abstand oder Soll-Abstand der vorgesehenen Furchen entspricht.

Bei einem Kontakt bzw. Zusammenstoß der Schareinheiten 21, 22 mit dem Störkörper S, werden die Schareinheiten 21, 22 mittels der Ausweicheinrichtung 31, 32 wie in Fig.2B gezeigt bzw. angedeutet zumindest temporär nach außen hin verschoben und/oder gespreizt, so dass sicher der Abstand A wie dargestellt vergrößert.

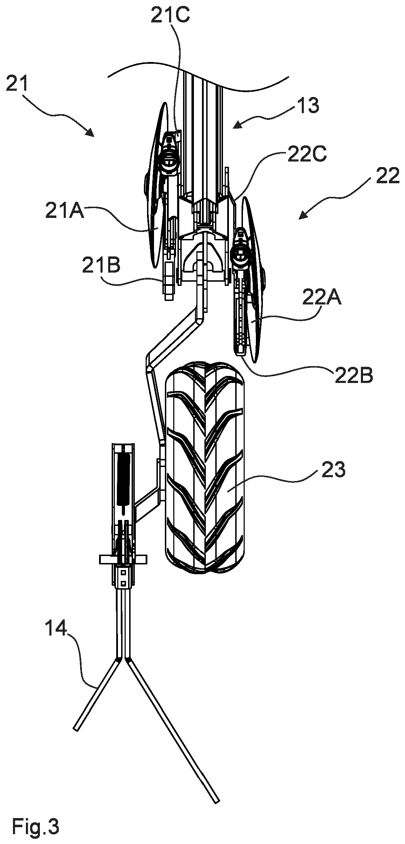

An dieser Stelle sei nochmal explizit darauf hingewiesen, dass die erfindungsgemäße Scharanordnung 20 nicht darauf beschränkt ist, dass die Schareinheiten 21, 22 wie in der Fig.2A oder 2B gezeigt, in Fahrtrichtung F auf etwa gleicher Höhe angeordnet sind. Vielmehr wäre in einer alternativen Ausführungsform denkbar, dass die Schareinheiten 21, 22 einer Scharanordnung 20 in Fahrtrichtung F versetzt zueinander angeordnet sein können, wie beispielsweise in der Fig.3 gezeigt.

Die erfindungsgemäße Ausweicheinrichtung 31, 32 kann hierbei unterschiedlich ausgebildet sein, wobei die entsprechende Funktionsweise anhand unterschiedlicher Ausführungsbeispiele nachfolgend näher beschrieben ist.

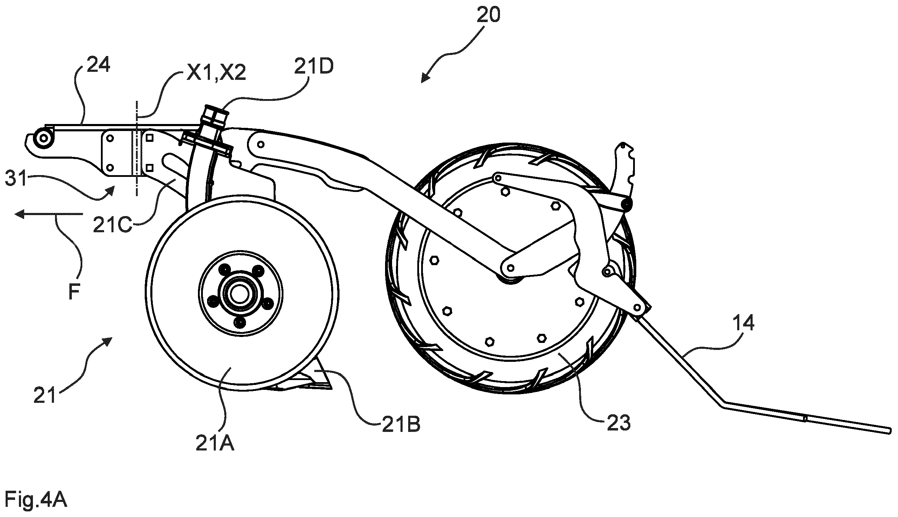

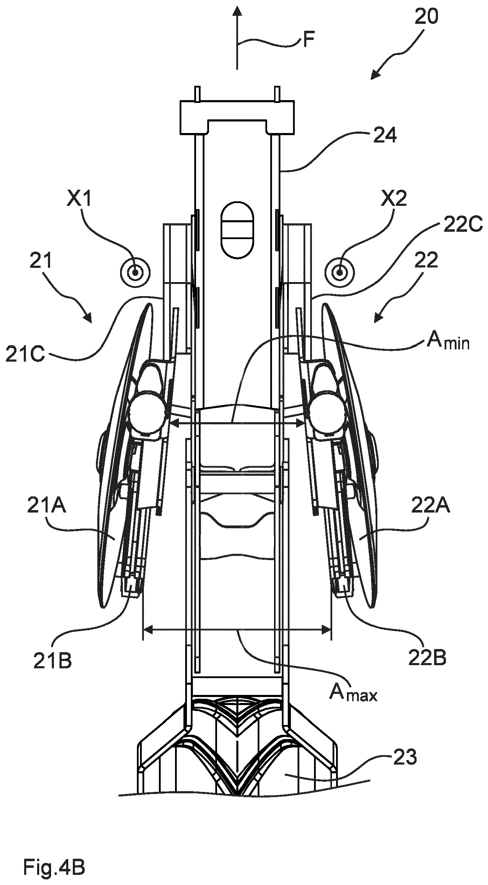

Die Fig.4A und 4B zeigen eine Scharanordnung 20, bei der die Schareinheiten 21, 22 mittels der Ausweicheinrichtung 31, 32 um eine zugeordnete und zumindest im Wesentlichen vertikal ausgerichtete Achse X1, X2, welche im nachfolgenden auch als Ausweichachse bezeichnet werden kann, verschwenkbar ist. Wie gut zu erkennen ist, ist die Achse X1, X2 in Fahrtrichtung F vor den Schareinheiten 21, 22 angeordnet. Die Schareinheiten 21, 22 sind somit nachlaufend zur jeweils zugeordneten Ausweicheinrichtung 31, 32 und/oder Achse X1, X2 angeordnet. Dies hat in der Praxis den Vorteil, dass sich die Schareinheiten 21, 22 nach dem Auslenken und/oder Verschwenken zumindest teilweise selbsttätig wieder in Richtung ihrer eigentlichen Ausgangsstellung bewegen und somit zumindest teilweise selbst wieder ausrichten. Ferner ist hierbei vorteilhaft, dass sich der Abstand A entlang der Schareinheiten 21, 22 unterscheidet. Wie dargestellt wird in Fahrtrichtung F gesehen in einem vorderen Bereich ein Abstand Aₘᵢₙ gebildet, welcher sich nur geringfügig oder gar nicht vom ursprünglichen Abstand A unterscheidet. Der Abstand der generierten Furchen wird während einem Verschwenken der Schareinheiten 21, 22 somit nur geringfügig oder gar nicht beeinflusst. Im hinteren Bereich der Schareinheiten 21, 22 wird hingegen ein maximaler Abstand Aₘₐₓ gebildet, welcher ein besonders einfaches Passieren und/oder Lösen des Störkörpers S erlaubt. Mit anderen Worten, bildet sich zwischen den Schareinheiten 21, 22 während dem Verschwenken ein sich nach hinten öffnendes V.

Hierbei sei explizit erwähnt, dass die Achsen X1, X2 nur schematisch angedeutet sind und abweichend zu den Abbildungen zusätzlich derart ausgerichtet und/oder angeordnet sind, dass sie die jeweilige Ausweicheinrichtung 31, 32 durchdringen und/oder schneiden, womit die eingezeichneten Positionen der Achsen X1, X2 nicht ganz den tatsächlichen Positionen entsprechen.

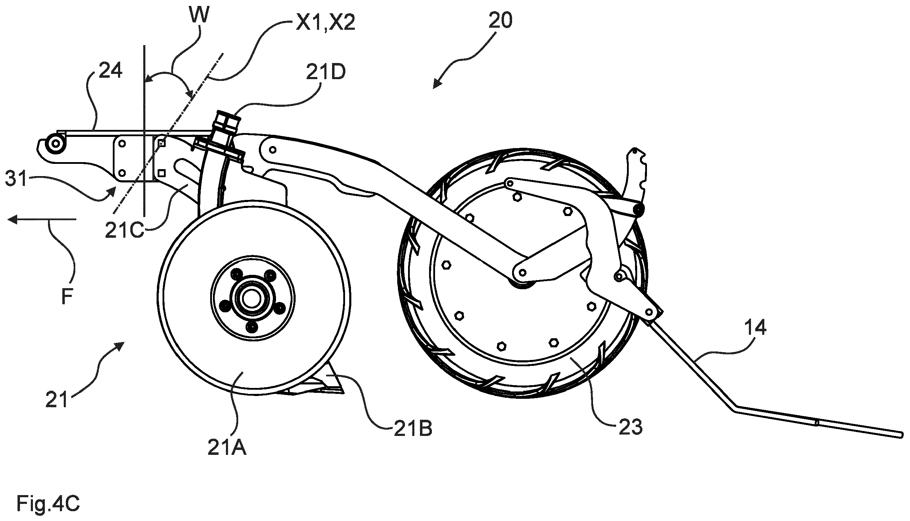

Eine alternative Ausführungsform ist in der Fig.4C gezeigt. Hier ist eine Scharanordnung 20 zu sehen, bei der die Achse X1, X2 zur Vertikalen geneigt ist. Der Winkel W zwischen den in Fig.4A und Fig.4C gezeigten Achsen beträgt etwa 30°. Alternativ kann der Winkel W auch einen beliebigen anderen Wert zwischen etwa 15° und 75°, insbesondere 30° und 45°, aufweisen.

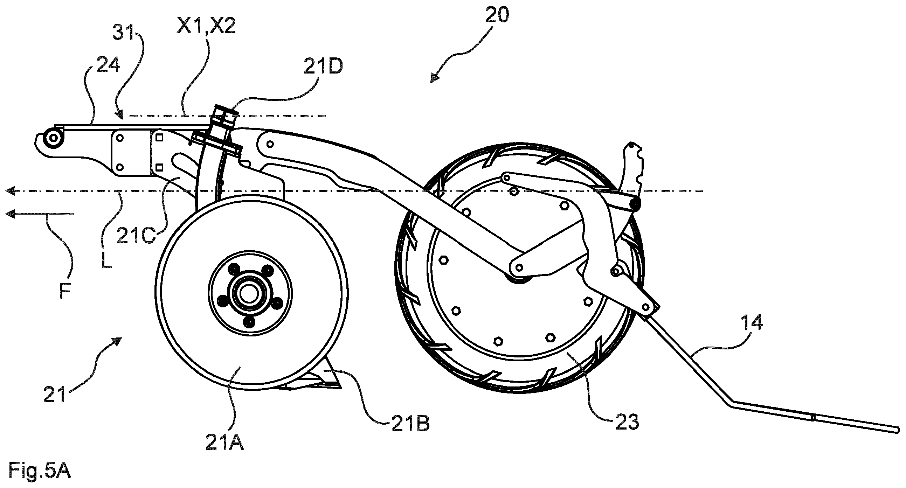

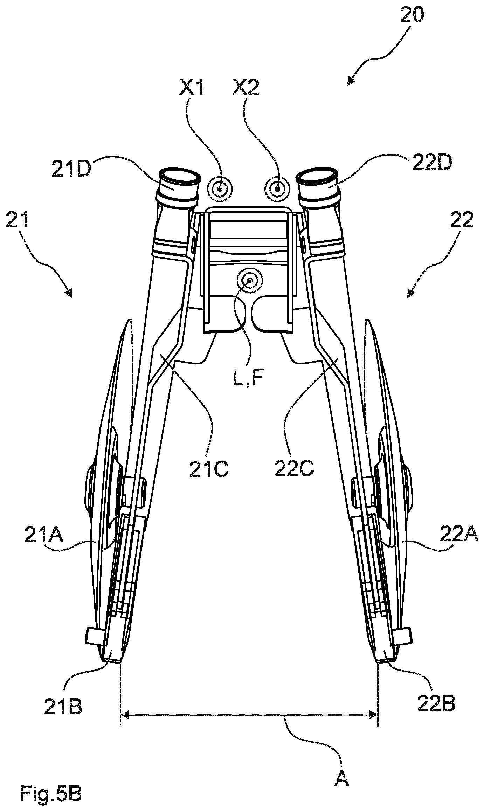

Ein weiteres aber nicht erfindungsgemäßes Ausführungsbeispiel ist in der Fig.5A und 5B zu sehen. Die Schareinheiten 21, 22 sind hierbei mittels der Ausweicheinrichtung 31, 32 um eine zur Längsrichtung L der Scharanordnung 20 und/oder zur Fahrtrichtung F korrespondierende Achse X1, X2 verschwenkbar. Die jeweilige Achse X1, X2 ist hierbei zumindest im Wesentlichen horizontal und parallel zur Längs- bzw. Fahrtrichtung L, F ausgerichtet, so dass die Schareinheiten 21, 22 hierbei dazu eingerichtet sind, beim Zusammenstoßen und/oder Kontakt mit dem Störkörper S in vertikaler Richtung nach oben hin weggeklappt und weggeschwenkt zu werden.

In einer weiteren alternativen oder zusätzlichen, jedoch nicht gezeigten, Ausführungsform kann auch vorgesehen sein, dass die in den Figuren 4A bis 5B gezeigten Achsen X1, X2 zusätzlich zueinander angestellt sind bzw. nicht parallel zueinander verlaufen.

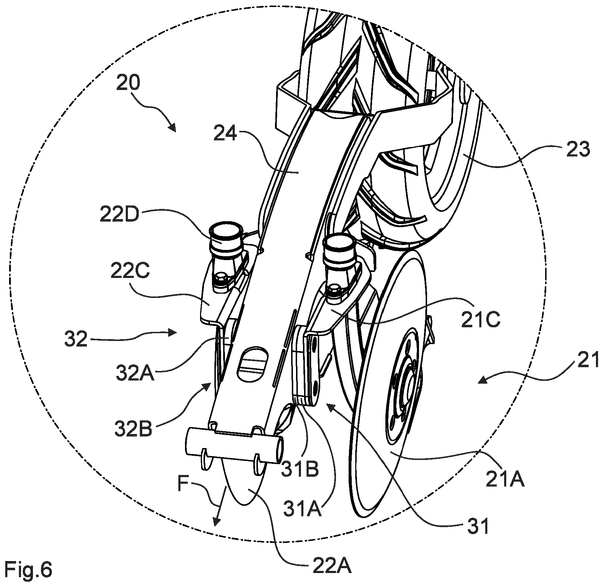

Wie in der Fig.6 besser zu erkennen ist, ist die Ausweicheinrichtung 31, 32 zwischen dem Tragarm 24 und den Haltearmen 21C, 22C angeordnet. Die Ausweicheinrichtung 31, 32 weist hierbei ein, insbesondere in Abhängigkeit des Abstands A der Schareinheiten 21, 22, elastisch verformbares Element 31A, 32A auf, welches nach Art eines Elastomers ausgebildet ist. Alternativ oder zusätzlich dazu kann die Ausweicheinrichtung 31, 32 auch andere Elemente aus elastischen Materialien, beispielsweise aus Kunststoff oder dergleichen, aufweisen. Darüber hinaus ist das verformbare Element 31, 32 zumindest im Wesentlichen flach bzw. scheibenförmig ausgebildet, wobei alternativ auch andere Formgebungen denkbar sind.

In einer nicht erfindungsgemäßen Ausführungsform kann auch vorgesehen sein, dass die Ausweicheinrichtung 31, 32 zumindest teilweise von den jeweiligen Haltearmen 21C, 22C gebildet wird. Die Haltearme 21C, 22C sind dabei zumindest teilweise federelastisch und/oder nach Art einer Blattfeder ausgebildet. Zumindest ein federelastischer Abschnitt der Haltearme 21, 22C kann dabei nach Art eines Federblechs oder aus, insbesondere faserverstärktem, Kunststoffmaterial ausgebildet sein. Darüber hinaus ist eine alternative Ausführungsform denkbar, bei der die beschriebenen unterschiedlichen Ausweicheinrichtungen 21, 22 miteinander kombiniert sind, beispielsweise aus einem elastisch verformbaren Element 31A, 32A zwischen dem Tragarm 24 und einem flexiblen bzw. verformbaren Haltearm 21C, 22C.

Wie in der Fig.6 ebenfalls zu erkennen ist, umfasst die Ausweicheinrichtung 31, 32 wenigstens ein austauschbares, insbesondere zwischen dem Tragarm 24 und dem jewieligen Haltearm 21C, 22C einbringbares, Distanzelement 31B, 32B, mittels dem der seitliche Abstand A zwischen den Schareinheiten 21, 22 in definierter Weise beeinflussbar ist. Es können beispielsweise Distanzelemente 31B, 32B unterschiedlicher Dicke oder Anzahl vorgesehen sein, welche von einem Anwender in Abhängigkeit des vorgesehenen Reihen- und/oder Furchenabstandes in die Ausweicheinrichtung 31, 32, insbesondere zwischen Tragarm 24 und Haltearm 21C, 22C, eingebracht und/oder montiert werden können. Insbesondere ist hierbei vorgesehen, dass das Distanzelement 31B, 32B zumindest im Wesentlichen fest und/oder unverformbar ausgebildet ist. Mittels derartig einbringbarer und/oder angeordneter Distanzelemente 31B, 32B ist die gesamte Schareinheit 21, 22 in besonders einfacher Weise an einen bestimmten Reihenabstand anpassbar. Insbesondere können dadurch die einer jeweiligen Schareinheit 21 zugeordneten Schare 21A-22B und die Materialzubring- und/oder Materialablagevorrichtung gemeinsam an den bestimmten Reihenabstand angepasst werden.

Darüber hinaus kann der Ausweicheinrichtung 31, 32 zumindest ein, in den Figuren jedoch nicht gezeigtes, Anschlagelement zugeordnet sein. Hierbei kann vorgesehen sein, dass das Anschlagelement zwischen dem Tragarm 24 und zumindest einem der jeweiligen Haltearme 21C, 22C angeordnet bzw. ausgebildet ist. Das Anschlagelement ist dabei dazu eingerichtet, den seitlichen Abstand A der Schareinheiten 21, 22 auf einen maximalen und/oder minimalen Abstand zu begrenzen. Mit anderen Worten, kann mittels dem wenigstens einen Anschlagelement sowohl eine maximale Spreizung der Schareinheiten 21, 22 als auch alternativ oder zusätzlich ein definierter Mindestabstand, welcher insbesondere dem Soll-Abstand der Furchen entspricht, vorgegeben werden.

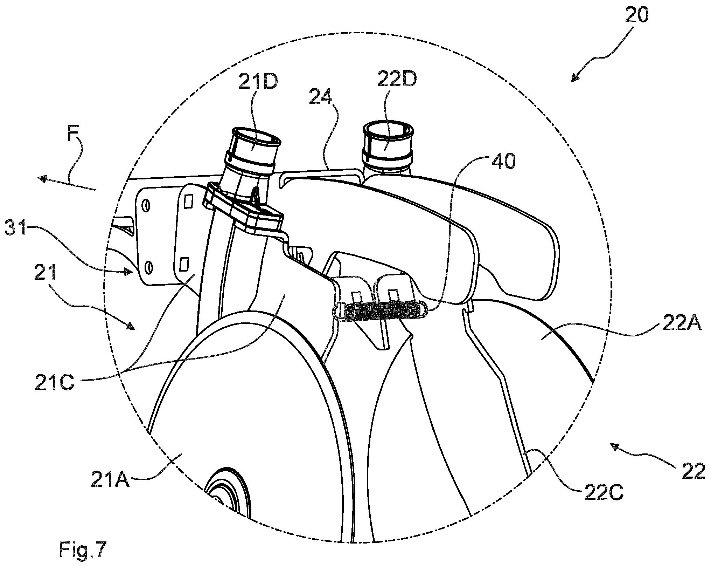

Die Fig.7 zeigt ein der Ausweicheinrichtung 31, 32 zugeordnetes optionales, insbesondere vorspannbares, Rückstellelement 40, welches dazu eingerichtet ist, die Schareinheiten 21, 22 nach dem Spreizen und/oder Verschwenken mittels einer Rückstellkraft in ihre Ausgangslage zurück zu bewegen und/oder zurück zu stellen. Wie gut zu erkennen ist, ist das Rückstellelement 40 hierbei beispielhaft nach Art einer Spiralfeder ausgebildet, wobei auch andere Arten von Federeinrichtungen, beispielsweise Federblechelemente, denkbar sind. Wie weiterhin zu erkennen ist, sind die Haltearme 21C, 22C über das Rückstellelement 40 direkt miteinander verbunden. Alternativ oder zusätzlich dazu können auch die Schare 21A-22B über das Rückstellelement 40 miteinander verbunden sein. Alternativ oder zusätzlich kann an wenigstens einer Schareinheit 21, 22 und/oder zwischen den Schareinheiten 21, 22 zumindest eine, insbesondere motorisch und/oder mittels Stellenergie, betätigbare Stelleinrichtung vorgesehen sein, welche dazu eingerichtet ist, eine derartige Rückstellkraft in die Schareinheiten 21, 22 einzuleiten und/oder zu übertragen.

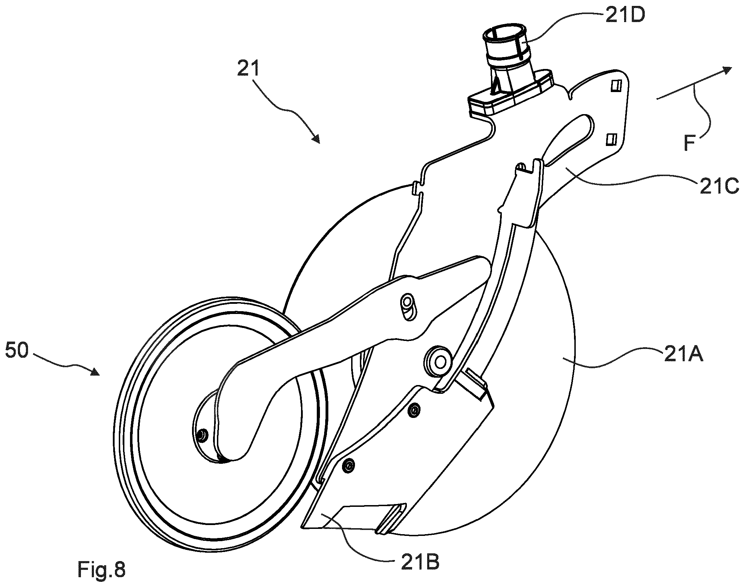

Eine weitere Alternative oder zusätzliche Ausführungsform ist in der Fig.8 gezeigt.

Hierbei ist einer der Schareinheiten 21 ein Fang- und/oder Andrückelement 50 zugeordnet, welches nach Art einer Fang- und/oder Andruckrolle ausgebildet ist und welches an dem Haltearm 21C und/oder an der Schareinheit 21, insbesondere am Schar 21B, angelenkt ist. Das Fang- und/oder Andrückelement 50 ist dabei derart mit der Schareinheit 21 verbunden, dass es mittels der Ausweicheinrichtung 31 in seiner Lage und/oder Position am Tragarm 24 in einer zur Schareinheit 21 korrespondierenden Weise beweglich angeordnet ist. Insbesondere ist hierbei vorgesehen, dass das Fang- und/oder Andruckelement 50 starr mit der Schareinheit 21 und/oder mit einem der Schareinheit 21 zugeordneten Haltearm 21C verbunden ist und somit mit der Schareinheit 21 beim Zusammenstoß mit dem Störkörper S mitverschoben und/oder mitverschwenkt wird. Die Ausweicheinrichtung 31 ist somit dazu eingerichtet, sowohl die Schareinheite 21 als auch das zugeordneten Fang- und/oder Andrückelement 50 zu verschwenken und/oder zu verschieben.

Hierbei sei explizit nochmal darauf hingewiesen, dass ein derartiges Fang- und/oder Andrückelement 50 auch zusätzlich an der jeweils anderen Schareinheit 22 der Scharanordnung 20 vorgesehen sein kann. Mit anderen Worten kann für jede Schareinheit 21, 22 einer Scharanordnung 20 ein derartig ausgebildetes und/oder angeordnetes Fang- und/oder Andrückelement 50 vorgesehen sein.

Weiterhin sei hier nochmal erwähnt, dass es in einer alternativen Ausführungsform vorgesehen sein kann, dass die Ausweicheinrichtung 31, 32 auch nur an einer Schareinheit 21, 22 einer Scharanordnung 20 angeordnet sein kann und somit nur einer der Schareinheiten 21, 22 zum Anpassen des seitlichen Abstandes A verschwenkbar ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Rahmen
- 11: Stelleinrichtung
- 12: Überlastsicherung
- 13: Parallelogramm-Aufhängung
- 14: Zustreichelemente
- 20: Scharanordnung
- 21, 22: Schareinheit
- 21A, 22A: Scheibenschar
- 21B, 22B: Meißelschar
- 21C, 22C: Haltearm
- 21D, 22D: Ausbringleitung
- 23: Tiefenführungsrolle
- 24: Tragarm
- 31, 32: Ausweicheinrichtung
- 31A, 32A: Elastisch verformbares Element
- 31B, 32B: Distanzelement
- 40: Rückstellelement

- A: Abstand
- Aₘᵢₙ: Minimaler Abstand
- Aₘₐₓ: Maximaler Abstand
- F: Fahrtrichtung
- L: Längsrichtung
- R: Seitliche Richtung
- S: Störkörper, Stein
- W: Winkel
- X1, X2: Achse, Schwenkachse

## Patentansprüche

1. Scharanordnung (20) für ein landwirtschaftliches Arbeitsgerät, umfassend;
- zumindest einen Tragarm (24), welcher in vertikaler Richtung schwenkbar an einem Rahmen (10) des Arbeitsgeräts anlenkbar ist; und
- mehrere mit einem Ackerboden in Eingriff bringbare Schareinheiten (21, 22), insbesondere Schare (21A-22B), welche jeweils über wenigstens einen Haltearm (21C, 22C) paarweise mit dem Tragarm (24) gekoppelt und mit einem definierten seitlichen Abstand (A) zueinander beabstandet angeordnet sind;
**dadurch gekennzeichnet, dass** wenigstens einer Schareinheit (21, 22), insbesondere einem Schar (21A-22B), zumindest eine Ausweicheinrichtung (31, 32) zugeordnet ist, welche zwischen dem Tragarm (24) und wenigstens einem der Haltearme (21C, 22C) angeordnet ist, und mittels der die Schareinheiten (21, 22), insbesondere Schare (21A-22B), in ihrer Lage und/oder Position am Tragarm (24), vorzugsweise mit veränderlichem Abstand (A), in einer im Wesentlichen seitlichen Richtung (R) zueinander beweglich angeordnet sind, wobei wenigstens eine der Schareinheiten (21, 22) mittels der zugeordneten Ausweicheinrichtung (31, 32) bezüglich des Tragarms (24) in seitlicher Richtung (R) und um eine zugeordnete und zumindest im Wesentlichen vertikal ausgerichtete Achse (X1, X2) verschwenkbar ist.

2. Scharanordnung (20) nach Anspruch 1, **dadurch gekennzeichnet, dass** wenigstens eine der Schareinheiten (21, 22) mittels der zugeordneten Ausweicheinrichtung (31, 32) bezüglich der jeweils anderen Schareinheit (21, 22) in seitlicher Richtung (R) verschwenkbar ist.

3. Scharanordnung (20) nach zumindest einem der vorgenannten Ansprüche, **dadurch gekennzeichnet, dass** die Ausweicheinrichtung (31, 32) zumindest ein, insbesondere in Abhängigkeit des Abstands (A) der Schareinheiten (21, 22), elastisch verformbares Element (31A, 32A) aufweist, welches vorzugsweise nach Art eines Elastomers ausgebildet ist.

4. Scharanordnung (20) nach zumindest einem der vorgenannten Ansprüche, **dadurch gekennzeichnet, dass** der wenigstens einen Ausweicheinrichtung (31, 32) und/oder wenigstens einer Schareinheit (21, 22) zumindest ein vorspannbares Rückstellelement (40), insbesondere nach Art eines Federelements, zugeordnet ist, welches vorzugsweise die Haltearme (21C, 22C) und/oder Schareinheiten (21, 22) miteinander verbindend angeordnet ist.

5. Scharanordnung (20) nach zumindest einem der vorgenannten Ansprüche, **dadurch gekennzeichnet, dass** die Ausweicheinrichtung (31, 32) wenigstens ein austauschbares, vorzugsweise zwischen dem Tragarm (24) und wenigstens einem der Haltearme (21C, 22C) einbringbares, Distanzelement (31B, 32B) umfasst, mittels dem der seitliche Abstand (A) zwischen den Schareinheiten (21, 22), insbesondere in definierter Weise, beeinflussbar ist.

6. Scharanordnung (20) nach zumindest einem der vorgenannten Ansprüche, **dadurch gekennzeichnet, dass** der Ausweicheinrichtung (31, 32) wenigstens ein, vorzugsweise zwischen dem Tragarm (24) und wenigstens einem der Haltearme (21C, 22C) ausgebildetes, Anschlagelement zugeordnet ist, mittels welchem der seitliche Abstand (A) der Schareinheiten (21, 22) auf einen maximalen und/oder minimalen Abstand begrenzt ist.

7. Scharanordnung (20) nach zumindest einem der vorgenannten Ansprüche, **dadurch gekennzeichnet, dass** die Schareinheiten (21, 22) zumindest nahezu spiegelbildlich zueinander am Tragarm (24) angeordnet und/oder ausgebildet sind.

8. Scharanordnung (20) nach zumindest einem der vorgenannten Ansprüche 1-6, **dadurch gekennzeichnet, dass** die Schareinheiten (21, 22) in Längs- und/oder Fahrtrichtung (F, L) gesehen versetzt zueinander angeordnet und/oder ausgebildet sind.

9. Scharanordnung (20) nach zumindest einem der vorgenannten Ansprüche, **dadurch gekennzeichnet, dass** jeder Schareinheit jeweils eine Ausweicheinrichtung (31, 32) zugeordnet ist.

10. Landwirtschaftliches Arbeitsgerät, insbesondere Sämaschine, zum Ausbringen und/oder Ablegen von granularem und/oder flüssigem Verteilgut, insbesondere Saatgut und/oder Dünger, entlang einer landwirtschaftlichen Nutzfläche, mit zumindest einer am Rahmen (10) des Arbeitsgeräts angelenkten Scharanordnung (20), **dadurch gekennzeichnet, dass** die zumindest eine Scharanordnung (20) nach zumindest einem der vorgenannten Ansprüche 1 bis 10 ausgebildet ist.

## Claims

1. Coulter arrangement (20) for an agricultural implement, the coulter arrangement comprising;
- at least one support arm (24), which can be coupled to a frame (10) of the implement so as to be pivotable in the vertical direction; and
- a plurality of coulter units (21, 22), in particular coulters (21A-22B), which can be brought into engagement with the arable soil and are each coupled in pairs to the support arm (24) via at least one retaining arm (21C, 22C) and are spaced apart from each other at a defined lateral distance (A);
**characterized in that** at least one coulter unit (21, 22), in particular one coulter (21A-22B), is assigned at least one evasion device (31, 32), which is arranged between the support arm (24) and at least one of the retaining arms (21C, 22C) and by means of which the coulter units (21, 22), in particular coulters (21A-22B), are arranged, preferably at a variable distance (A), so as to be movable relative to one another in their location and/or position on the support arm (24) in a substantially lateral direction (R), at least one of the coulter units (21, 22) being pivotable with respect to the support arm (24) in a lateral direction (R) and about an assigned and at least substantially vertically oriented axis (X1, X2) by means of the assigned evasion device (31, 32).

2. Coulter arrangement (20) according to claim 1, **characterized in that** at least one of the coulter units (21, 22) can be pivoted in the lateral direction (R) relative to the other coulter unit (21, 22) by means of the assigned evasion device (31, 32).

3. Coulter arrangement (20) according to at least one of the preceding claims, **characterized in that** the evasion device (31, 32) has at least one, in particular depending on the distance (A) between the coulter units (21, 22), elastically deformable element (31A, 32A), which is preferably in the form of an elastomer.

4. Coulter arrangement (20) according to at least one of the preceding claims, **characterized in that** the at least one evasion device (31, 32) and/or at least one coulter unit (21, 22) is assigned at least one pre-loadable return element (40), in particular in the form of a spring element, which preferably interconnects the retaining arms (21C, 22C) and/or coulter units (21, 22).

5. Coulter arrangement (20) according to at least one of the preceding claims, **characterized in that** the evasion device (31, 32) comprises at least one interchangeable spacer element (31B, 32B), which is preferably insertable between the support arm (24) and at least one of the retaining arms (21C, 22C) and by means of which the lateral distance (A) between the coulter units (21, 22) can be influenced, in particular in a defined manner.

6. Coulter arrangement (20) according to at least one of the preceding claims, **characterized in that** the evasion device (31, 32) is assigned at least one stop element, which is preferably formed between the support arm (24) and at least one of the retaining arms (21C, 22C) and by means of which the lateral distance (A) between the coulter units (21, 22) is limited to a maximum and/or minimum distance.

7. Coulter arrangement (20) according to at least one of the preceding claims, **characterized in that** the coulter units (21, 22) are arranged and/or formed on the support arm (24) so as to be at least approximately a mirror image of each other.

8. Coulter arrangement (20) according to at least one of the preceding claims 1-6, **characterized in that** the coulter units (21, 22) are arranged and/or formed so as to be offset from each other as viewed in the longitudinal direction and/or travel direction (F, L).

9. Coulter arrangement (20) according to at least one of the preceding claims, **characterized in that** each coulter unit is assigned an evasion device (31, 32).

10. Agricultural implement, in particular a seed drill, for spreading and/or depositing granular and/or liquid distribution material, in particular seed and/or fertilizer, over an agricultural area, the agricultural implement comprising at least one coulter arrangement (20) coupled to the frame (10) of the implement, **characterized in that** the at least one coulter arrangement (20) is designed according to at least one of the preceding claims 1 to 10.

## Revendications

1. Agencement de soc (20) pour un outil de travail agricole, comprenant ;
- au moins un bras de support (24) qui peut être articulé de manière pivotante en direction verticale sur un cadre (10) de l'outil de travail ; et
- plusieurs unités de soc (21, 22) pouvant être mises en prise avec un sol arable, en particulier des socs (21A-22B), qui sont respectivement accouplées par paires au bras porteur (24) par l'intermédiaire d'au moins un bras de retenue (21C, 22C) et qui sont agencées à une distance latérale définie (A) les unes des autres ;
**caractérisé en ce qu'**à au moins une unité de soc (21, 22), en particulier à un soc (21A-22B), est associé au moins un appareil d'évitement (31, 32) qui est agencé entre le bras de support (24) et au moins l'un des bras de retenue (21C, 22C), et par le biais duquel dispositif d'évitement les unités de soc (21, 22), en particulier les socs (21A-22B), sont agencées mobiles les unes par rapport aux autres dans leur emplacement et/ou leur position sur le bras de support (24), de préférence avec une distance (A) variable, dans une direction essentiellement latérale (R), dans lequel au moins l'une des unités de soc (21, 22) peut être pivotée par le biais du dispositif d'évitement (31, 32) associé par rapport au bras de support (24) dans la direction latérale (R) et autour d'un axe (X1, X2) associé et orienté au moins essentiellement verticalement.

2. Agencement de soc (20) selon la revendication 1,
**caractérisé en ce qu'**au moins l'une des unités de socs (21, 22) peut être pivotée par le biais du dispositif d'évitement (31, 32) associé par rapport à l'autre unité de soc (21, 22) respective dans la direction latérale (R).

3. Agencement de soc (20) selon au moins l'une des revendications précédentes, **caractérisé en ce que** le dispositif d'évitement (31, 32) présente au moins un élément (31A, 32A) élastiquement déformable, en particulier en fonction de la distance (A) des unités de soc (21, 22), élément qui est de préférence conçu à la manière d'un élastomère.

4. Agencement de soc (20) selon au moins l'une des revendications précédentes, **caractérisé en ce qu'**au moins un élément de rappel (40) pouvant être précontraint, en particulier à la manière d'un élément de ressort, est associé à l'au moins un dispositif d'évitement (31, 32) et/ou à au moins une unité de soc (21, 22), lequel élément de rappel est agencé de préférence en reliant entre eux les bras de retenue (21C, 22C) et/ou les unités de soc (21, 22).

5. Agencement de soc (20) selon au moins l'une des revendications précédentes, **caractérisé en ce que** le dispositif d'évitement (31, 32) comprend au moins un élément d'écartement (31B, 32B) interchangeable, pouvant de préférence être inséré entre le bras de support (24) et au moins l'un des bras de retenue (21C, 22C), par le biais duquel élément d'écartement la distance (A) latérale entre les unités de soc (21, 22) peut être influencée, en particulier de manière définie.

6. Agencement de soc (20) selon au moins l'une des revendications précédentes, **caractérisé en ce qu'**au dispositif d'évitement (31, 32) est associé au moins un élément de butée, de préférence conçu entre le bras de support (24) et au moins l'un des bras de retenue (21C, 22C), par le biais duquel élément de butée la distance (A) latérale des unités de soc (21, 22) est limitée à une distance maximale et/ou minimale.

7. Agencement de soc (20) selon au moins l'une des revendications précédentes, **caractérisé en ce que** les unités de soc (21, 22) sont agencées et/ou conçues sur le bras de support (24) de manière au moins pratiquement symétrique en miroir l'une par rapport à l'autre.

8. Agencement de soc (20) selon au moins l'une des revendications 1-6 précitées, **caractérisé en ce que** les unités de socs (21, 22) sont agencées et/ou conçues de manière décalée les unes par rapport aux autres, vues dans la direction longitudinale et/ou la direction de déplacement (F, L).

9. Agencement de soc (20) selon au moins l'une des revendications précédentes, **caractérisé en ce qu'**à chaque unité de soc est associé respectivement un dispositif d'évitement (31, 32).

10. Outil de travail agricole, en particulier semoir, permettant d'épandre et/ou déposer des produits de distribution granuleux et/ou liquides, en particulier des semences et/ou des engrais, le long d'une surface agricole utile, comportant au moins un agencement de soc (20) articulé sur le cadre (10) de l'outil de travail, **caractérisé en ce que** l'au moins un agencement de soc (20) est conçu selon au moins l'une des revendications 1 à 10 précitées.
